# EUROPEAN PATENT SPECIFICATION

(11) **EP 3 439 216 B1**
(45) Date of publication and mention of the grant of the patent: **29.09.2021**
(21) Application number: 18195319.1
(22) Date of filing: 28.06.2017
(51) Int. Cl.: H04L 1/18

(54) **DEVICE AND METHOD OF HANDLING UPLINK TRANSMISSION**
VORRICHTUNG UND VERFAHREN ZUR HANDHABUNG EINER UPLINK-ÜBERTRAGUNG
DISPOSITIF ET PROCÉDÉ DE GESTION DE TRANSMISSION DE LIAISON MONTANTE

(30) Priority: 28.06.2016 US 201662355351 P
(43) Date of publication of application: 06.02.2019
(62) Divisional of application: 17178491.1
(73) Proprietor: HTC Corporation, Taoyuan City 330, (TW)
(72) Inventor: WU, Chih-Hsiang, 330 Taoyuan City (TW)
(74) Representative: Emde, Eric

(56) References cited:
- CATT: "DRX and Short Interval SPS", 3GPP DRAFT; R2-156257_DRX AND SHORT INTERVAL SPS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Anaheim, USA; 20151116 - 20151120 16 November 2015 (2015-11-16), XP051005753, Retrieved from the Internet: URL:http://www.3gpp.org/ftp/Meetings_3GPP_ SYNC/RAN2/Docs/ [retrieved on 2015-11-16]
- ERICSSON: "MAC impacts of asynchronous HARQ for BL UEs and UEs in EC", 3GPP DRAFT; R2-161689 - MAC IMPACTS OF ASYNCHRONOUS HARQ FOR BL UES AND UES IN EC, 3RD GENERATION PARTNERSHIP PROJECT (3GPP), MOBILE COMPETENCE CENTRE ; 650, ROUTE DES LUCIOLES ; F-06921 SOPHIA-ANTIPO , vol. RAN WG2, no. St. Julian's, Malta; 20160215 - 20160219 6 February 2016 (2016-02-06), XP051065925, Retrieved from the Internet: URL:http://www.3gpp.org/ftp/tsg_ran/WG2_RL 2/TSGR2_93/Docs/ [retrieved on 2016-02-06]

## Description

### Background of the Invention

### 1. Field of the Invention

The present invention relates to a network and a method used in a wireless communication system, and more particularly, to a network and a method of handling an uplink transmission.

### 2. Description of the Prior Art

In a long-term evolution (LTE) system, a radio access network known as an evolved universal terrestrial radio access network (E-UTRAN) includes at least one evolved Node-B (eNB) for communicating with a user equipment (UE), and for communicating with a core network. The core network may include mobility management and Quality of Service (QoS) control for the UE.

CATT, "DRX and Short Interval SPS", RAN WG2, Anaheim, USA; November 16, 2015, 3GPP DRAFT; R2-156257_DRX AND SHORT INTERVAL SPS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Meetings_3GPP_SYNC/RAN2/Docs/, discusses DRX and Short Interval SPS **and** proposes to confirm that UL SPS resource can be configured outside of DRX active time..

ERICSSON, "MAC impacts of asynchronous HARQ for BL UEs and UEs in EC", RAN WG2, St. Julian's, Malta; 6 February 2016, 3GPP DRAFT; R2-161689 - MAC IMPACTS OF ASYNCHRONOUS HARQ FOR BL UES AND UES IN EC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, URL: http://www.3gpp.org/ftp/tsg_ran/WG2_RL2/TSGR2_93/Docs/,
discloses to use explicit UL grants for all bundle retransmissions, that is, use adaptive UL HARQ for Rel-13 LC UEs and UEs in enhanced coverage (depending on RANI decision).

### Summary of the Invention

The present invention therefore provides a network and method for handling an uplink transmission to solve the abovementioned problem.

A network for handling an uplink (UL) transmission, comprises a storage device for storing instructions and a processing circuit coupled to the storage device. The processing circuit is configured to execute the instructions stored in the storage device. The instructions comprise configuring a discontinuous reception (DRX) operation to a communication device; transmitting a semi-persistent scheduling (SPS) UL grant on a control channel to the communication device, wherein the SPS UL grant indicates a UL frequency resource periodically allocated to the communication device for a plurality of UL transmissions; receiving at least one first repetition of a UL transmission from the communication device, wherein the at least one first repetition is transmitted by the communication device using a HARQ process according to the SPS UL grant and a UL HARQ RTT timer is started by the communication device for the HARQ process in response to the UL transmission; and transmitting a dynamic scheduling UL grant to the communication device, when the UL HARQ RTT timer expires and the UL transmission is not successfully received, wherein the dynamic scheduling UL grant indicates the communication device to retransmit the first UL transmission.

Also, a method of handling an uplink (UL) transmission in a network is provided as set forth in claim 6.

Preferred embodiments of the present invention may be gathered from the dependent claims.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of a wireless communication system according to an example of the present invention.
Fig**.** 2 is a schematic diagram of a communication device according to an example of the present invention.
Fig. 3 is a flowchart of a process.
Fig. 4 is a flowchart of another process.
Fig. 5 is a flowchart of a process according to an embodiment of the present invention.
Fig. 6 is a flowchart of another process.

### Detailed Description

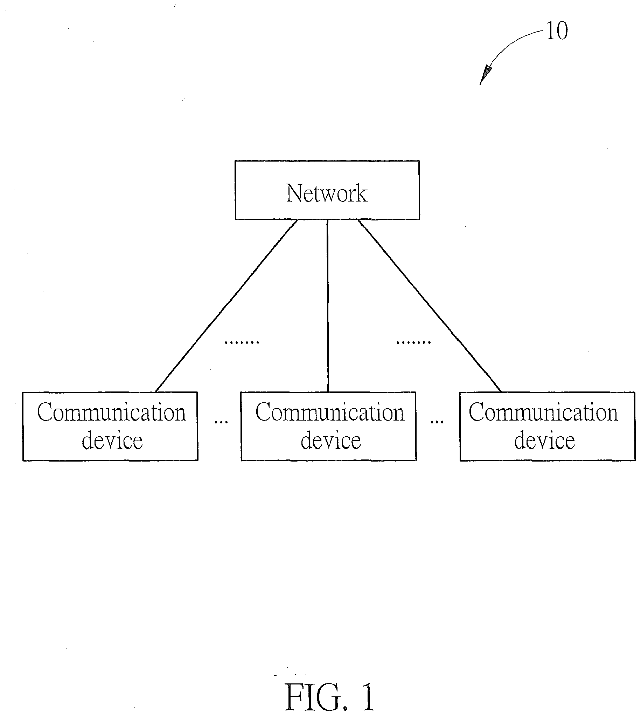

Fig. 1 is a schematic diagram of a wireless communication system 10 according to an example of the present invention. The wireless communication system 10 is briefly composed of a network and a plurality of communication devices. The network and a communication device communicate with each other via one or more cells on one or more carriers of licensed band(s) and/or unlicensed band(s). The one or more cells may be operated in the same or different frame structure types, or in the same or different duplexing modes, i.e. frequency-division duplexing (FDD) and time-division duplexing (TDD).

In Fig. 1, the network and the communication devices are simply utilized for illustrating the structure of the wireless communication system 10. The network may include a radio access network (RAN) including at least one base station (BS). Practically, the RAN may be an evolved universal terrestrial radio access network (E-UTRAN) including at least one evolved Node-B (eNB). The RAN may be a fifth generation (5G) network including at least one 5G BS (e.g., gNB) which employs orthogonal frequency-division multiplexing (OFDM) and/or non-OFDM and a transmission time interval (TTI) shorter than 1ms (e.g. 100 or 200 microseconds), to communicate with the communication devices. In general, a BS may also be used to refer any of the eNB and the 5G BS. Furthermore, the network may also include a core network which includes network entities connecting to the RAN.

A communication device may be a user equipment (UE), a machine type communication (MTC) device, a mobile phone, a laptop, a tablet computer, an electronic book, a portable computer system, a vehicle, or an aircraft. In addition, the network and the communication device can be seen as a transmitter or a receiver according to direction (i.e., transmission direction), e.g., for an uplink (UL), the communication device is the transmitter and the network is the receiver, and for a downlink (DL), the network is the transmitter and the communication device is the receiver.

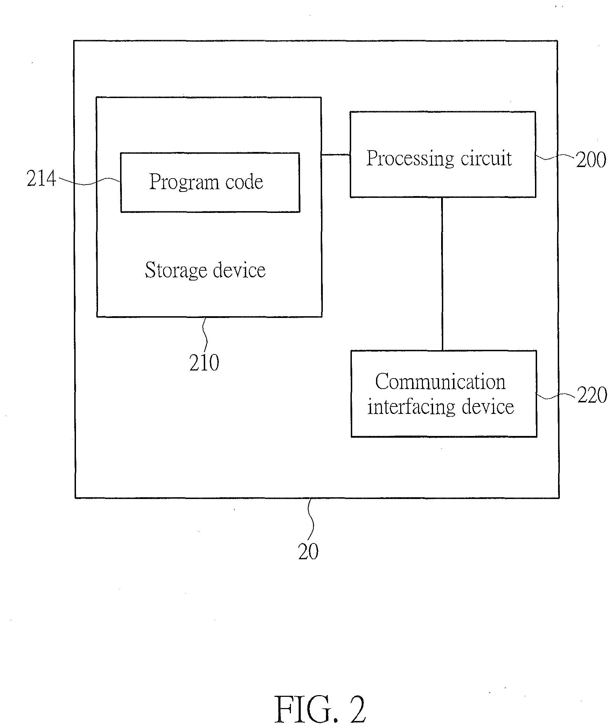

Fig. 2 is a schematic diagram of a communication device 20 according to an example of the present invention. The communication device 20 may be a communication device or the network shown in Fig. 1, but is not limited herein. The communication device 20 may include a processing circuit 200 such as a microprocessor or Application Specific Integrated Circuit (ASIC), a storage device 210 and a communication interfacing device 220. The storage device 210 may be any data storage device that may store a program code 214, accessed and executed by the processing circuit 200. Examples of the storage device 210 include but are not limited to a subscriber identity module (SIM), read-only memory (ROM), flash memory, random-access memory (RAM), hard disk, optical data storage device, non-volatile storage device, non-transitory computer-readable medium (e.g., tangible media), etc. The communication interfacing device 220 includes a transceiver and is used to transmit and receive signals (e.g., data, messages and/or packets) according to processing results of the processing circuit 200.

In the following embodiments, a UE is used to represent a communication device in Fig. 1, to simplify the illustration of the embodiments.

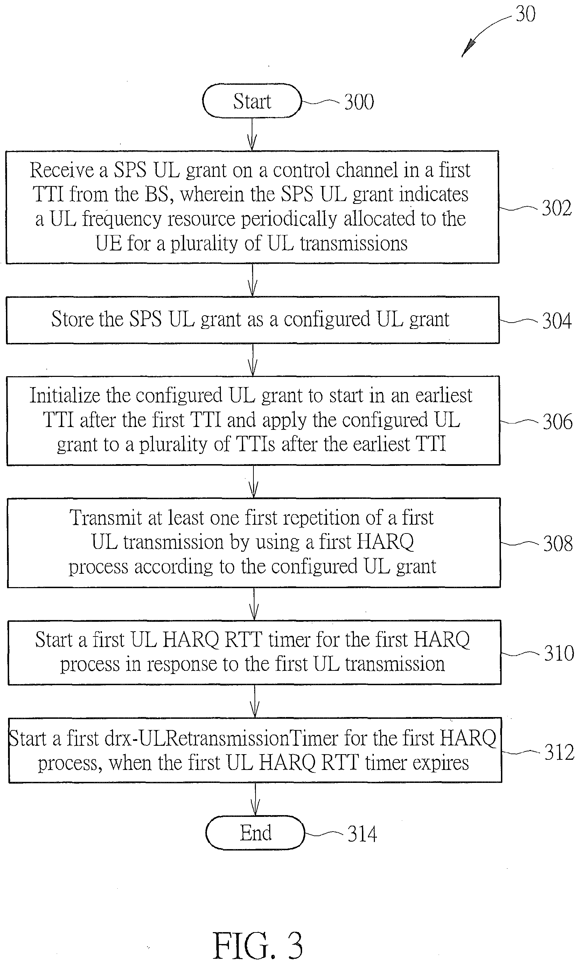

Fig. 3 is a flowchart of a process 30. The process 30 is utilized in a UE (e.g., a communication device in Fig. 1), to handle a UL transmission (e.g., asynchronous transmission). The process 30 includes the following steps:
Step 300: Start.
Step 302: Receive a semi-persistent scheduling (SPS) UL grant on a control channel in a first TTI from the BS, wherein the SPS UL grant indicates a UL frequency resource periodically allocated to the UE for a plurality of UL transmissions.
Step 304: Store the SPS UL grant as a configured UL grant.
Step 306: Initialize the configured UL grant to start in an earliest TTI after the first TTI and apply the configured UL grant to a plurality of TTIs after the earliest TTI.
Step 308: Transmit at least one first repetition of a first UL transmission by using a first hybrid automatic repeat request (HARQ) process according to the configured UL grant.
Step 310: Start a first UL HARQ RTT timer for the first HARQ process in response to the first UL transmission.
Step 312: Start a first drx-ULRetransmissionTimer for the first HARQ process, when the first UL HARQ RTT timer expires.
Step 314: End.

According to the process 30, the UE starts a first UL HARQ RTT timer for the first HARQ process in response to the first UL transmission, when the UE has the configured UL grant for the first HARQ process. The SPS UL grant may include a HARQ process number indicating a HARQ process identifier of the first HARQ process. When the network does not successfully receive the first UL transmission, the network takes the first UL HARQ RTT timer into account to schedule a UL retransmission of the first UL transmission. That is, the network does not transmit a dynamic scheduling UL grant indicating the UL retransmission to the UE, before the first UL HARQ RTT timer expires. In one example, the control channel is a physical DL control channel (PDCCH), an enhanced PDCCH (EPDCCH), a machine-type communications (MTC) PDCCH (MPDCCH), a short PDCCH (sPDCCH) or a narrowband PDCCH (NPDCCH). In one example, the control channel is a dedicated control channel (DCCH). The network may transmit the SPS UL grant in a first DL control information (DCI) or in a Radio Resource Control (RRC) message. In one example, the network transmits the dynamic scheduling UL grant to the UE in a second DCI in a second TTI on the control channel.

The UE may transmit a repetition of the first UL transmission in a TTI of the plurality of TTIs. The UE may start the first UL HARQ RTT timer for the first HARQ process according to the TTI (i.e., the timing of the first UL transmission). For example, the UE starts the first UL HARQ RTT timer in the TTI. In one example, the repetition may be the last repetition.

As stated in the process 30, the UE starts the first drx-ULRetransmissionTimer, when the first UL HARQ RTT timer expires. Thus, the UE may monitor the control channel (e.g., PDCCH, EPDCCH, MPDCCH or NPDCCH), when the first drx-ULRetransmissionTimer is running in TTI(s) belonging to an off duration of a discontinuous reception (DRX) cycle configured by the network to the UE. The UE performs a DRX operation according to the DRX cycle. When the network needs (or intends) to transmit a control command to the UE in the off duration of the DRX cycle, the network can transmit a UL grant to the UE in one of the TTI(s) since the first drx-ULRetransmissionTimer is running. In other words, the network also takes into account whether the first drx-ULRetransmissionTimer is running (especially in the off duration of the DRX cycle of the UE), when the network needs to transmit the control command. That is, the network may not transmit the control command in the TTI(s) of the DRX cycle of the UE, when the first drx-ULRetransmissionTimer is not running.

In one example, the network maintains a timer corresponding to the first drx-ULRetransmissionTimer running in the UE. The network determines that the first drx-ULRetransmissionTimer is running, when the timer is running. The network determines that the first drx-ULRetransmissionTimer is not running, when the timer is not running (e.g., expires). In another example, the network determines the first drx-ULRetransmissionTimer is running, when a TTI is within a first length of the first drx-ULRetransmissionTimer which starts according to a second length of the first UL HARQ RTT timer. The network determines that the first drx-ULRetransmissionTimer is not running, when a TTI is outside the first length. The second length may be configured by the network or may be predetermined by the UE.

In one example, the first repetition of the at least one first repetition is a new transmission, and rest of the at least one first repetition after the first repetition is retransmission(s). The UE transmit the new transmission in a TTI. The UE transmits the rest of the at least one first repetition in TTI(s) following the TTI. In one example, the at least one first repetition includes a first plurality of repetitions, if the UE is a narrowband Internet of Things (IoT) (NB-IoT) UE, is a bandwidth-reduced low-complexity (BL) UE (BL UE), or is in coverage enhancement (CE). The repetition number of the first plurality of repetitions may be indicated in the SPS UL grant. In one example, the at least one first repetition includes only one repetition (i.e., the UE transmits the first UL transmission only once), if the UE is none of a NB-IoT UE, a BL UE, and in CE. In this example, the SPS UL grant may not indicate the repetition number, or may indicate only one repetition.

In one example, the UE starts the first UL HARQ RTT timer in response to the first UL transmission by starting the first UL HARQ RTT timer in response to one of the first plurality of repetitions. For example, the one of the first plurality of repetitions may be the first repetition, the second repetition, ..., or the last repetition of the first plurality of repetitions.

In one example, the network transmits the control command on the control channel. The control command may be a dynamic scheduling UL grant, the SPS UL grant, a dynamic scheduling DL assignment, a SPS DL assignment, a UL power control command, a Channel State Information (CSI) request or a sounding reference symbols (SRS) request. The UE may transmit at least one second repetition of the retransmission by using the first HARQ process according to the dynamic scheduling UL grant, if the dynamic scheduling UL grant indicates a UL retransmission of the first UL transmission. The at least one second repetition may include only one repetition (i.e., the UE transmits the second UL transmission only once), if the UE is none of a NB-IoT UE, a BL UE, and in CE. The at least one second repetition may include a second plurality of repetitions, if the UE is a NB-IoT UE, a BL UE, or in CE. The number of the second plurality of repetitions may be indicated in the dynamic scheduling UL grant.

It should be noted that when the UE receives the SPS UL grant in the TTI, e.g., which is (n+k) time units before the earliest TTI, the UE transmits a third UL transmission according to the SPS UL grant in the earliest TTI. "k" may be a non-negative integer which is configured by the network or is predetermined by the UE. In one example, "k" may be 4 for a FDD mode, and may be 0, 1, 2, ... for a TDD mode according to a TDD configuration. In one example, the time unit is a subframe or a time slot. In another example, the time unit is a time duration of 1, 2, 3 or 4 OFDM symbols. Depending on whether the UE is configured to use repetitions, the third UL transmission may include one or more repetitions.

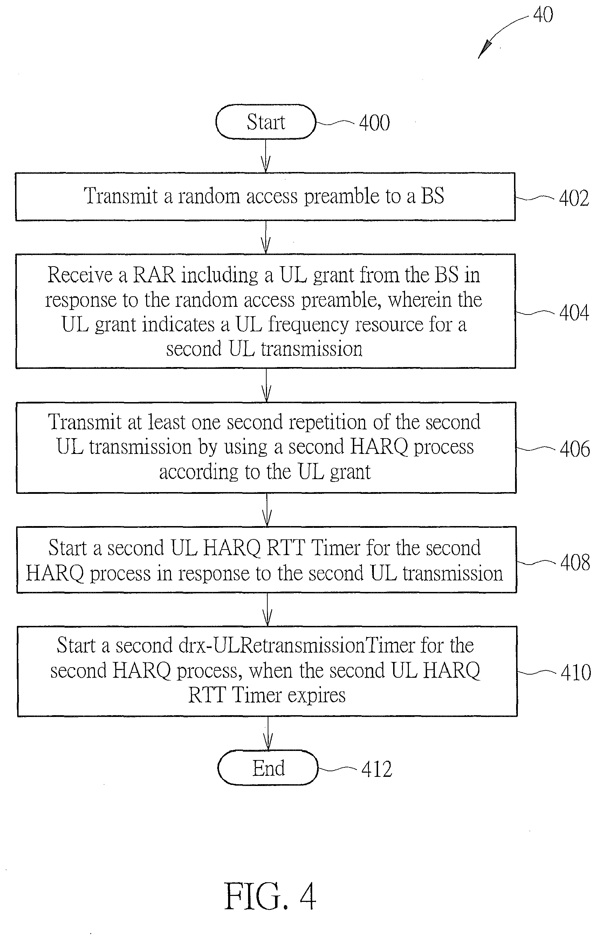

Fig. 4 is a flowchart of a process 40. The process 40 is utilized in a UE (e.g., a communication device in Fig. 1), to handle a UL transmission (e.g., asynchronous transmission). The process 40 includes the following steps:
Step 400: Start.
Step 402: Transmit a random access preamble to a BS.
Step 404: Receive a random access response (RAR) including a UL grant from the BS in response to the random access preamble, wherein the UL grant indicates a UL frequency resource for a second UL transmission.
Step 406: Transmit at least one second repetition of the second UL transmission by using a second HARQ process according to the UL grant.
Step 408: Start a second UL HARQ RTT Timer for the second HARQ process in response to the second UL transmission.
Step 410: Start a second drx-ULRetransmissionTimer for the second HARQ process, when the second UL HARQ RTT Timer expires.
Step 412: End.

According to the process 40, the UE starts a second UL HARQ RTT timer for the second HARQ process in response to the second UL transmission configured by the RAR. In one example, the UE receives the RAR in a physical DL shared channel (PDSCH), a narrowband PDSCH (NPDSCH) or a short PDSCH (sPDSCH). That is, even if the UE does not receive a PDCCH in a TTI, which indicates the UE to transmit the second UL transmission, the UE starts the second UL HARQ RTT timer. When the network does not successfully receive the second UL transmission, the network takes the second UL HARQ RTT timer into account to schedule a UL retransmission of the second UL transmission. That is, the network does not transmit a dynamic scheduling UL grant indicating the UL retransmission to the UE before the second UL HARQ RTT timer expires. The RAR may include a timing adjustment value. The RAR may include a HARQ process number indicating a HARQ process identifier of the second HARQ process. The UE may recognize the second HARQ process according to the HARQ process number. If the RAR does not include the HARQ process number, the second HARQ process may be predetermined in the UE for a UL transmission indicated by the RAR. For example, the UE always sets the second HARQ process to be the HARQ process addressed by the HARQ process identifier 0. The network may use a soft buffer corresponding to a predetermined HARQ process identifier to receive the UL transmission and the UL retransmission (e.g., if requested by the dynamic scheduling UL grant).

The UE may transmit a repetition of the second UL transmission in a TTI. The UE may start the second UL HARQ RTT timer for the second HARQ process according to the TTI (i.e., the timing of the second UL transmission). For example, the UE starts the second UL HARQ RTT timer in the TTI. In one example, the repetition may be the last repetition.

As stated in the process 40, the UE starts the second drx-ULRetransmissionTimer for the second HARQ process, when the second UL HARQ RTT timer expires. Thus, the UE may monitor the control channel (e.g., PDCCH, EPDCCH, MPDCCH or NPDCCH), when the second drx-ULRetransmissionTimer is running in TTI(s) belonging to an off duration of a DRX cycle configured by the network. The UE performs a DRX operation according to the DRX cycle. When the network needs to transmit a control command to the UE in the off duration of the DRX cycle, the network can transmit a UL grant in one of the TTI(s) to the UE since the second drx-ULRetransmissionTimer is running. In other words, the network also takes into account whether the second drx-ULRetransmissionTimer is running (especially in the off duration of the DRX cycle of the UE), when the network needs (or intends) to transmit the control command. That is, the network may not transmit the control command in the off duration of the DRX cycle of the UE, when the second drx-ULRetransmissionTimer is not running. In one example, the UE transmits a retransmission of the second UL transmission, when the UE receives the control command indicating the retransmission. That is, the control command includes a dynamic scheduling UL grant. The control command may include the HARQ process number (e.g., 0) indicating the HARQ process identifier.

In one example, the network maintains a timer corresponding to the second drx-ULRetransmissionTimer running in the UE. The network determines that the second drx-ULRetransmissionTimer is running, when the timer is running. The network determines that the second drx-ULRetransmissionTimer is not running, when the timer is not running (e.g., expires). In another example, the network determines that the second drx-ULRetransmissionTimer is running, when a TTI is within a first length of the second drx-ULRetransmissionTimer which starts according to a second length of the second UL HARQ RTT timer. The second length may be configured by the network or may be predetermined by the UE.

In one example, the first repetition of the at least one second repetition is a new transmission, and rest of the at least one second repetition after the first repetition is retransmission(s). The UE transmits the new transmission in a TTI. The UE transmits the rest of the at least one second repetition in TTI(s) following the TTI. In one example, the at least one second repetition includes a second plurality of repetitions, if the UE is a NB-IoT UE, is a BL UE, or is in CE. The repetition number of the second plurality of repetitions may be indicated in the RAR. In one example, the at least one second repetition includes only one repetition (i.e., the UE transmits the second UL transmission only once), if the UE is none of a NB-IoT UE, a BL UE, and in CE. In this example, the RAR may not indicate the repetition number, or may indicate only one repetition.

In one example, the UE starts the second UL HARQ RTT timer in response to the second UL transmission by starting the second UL HARQ RTT timer in response to one of the second plurality of repetitions. For example, the one of the second plurality of repetitions may be the first repetition, the second repetition, ..., or the last repetition of the second plurality of repetitions.

The network may transmit the control command on a control channel as described in the process 30, and is not narrated herein.

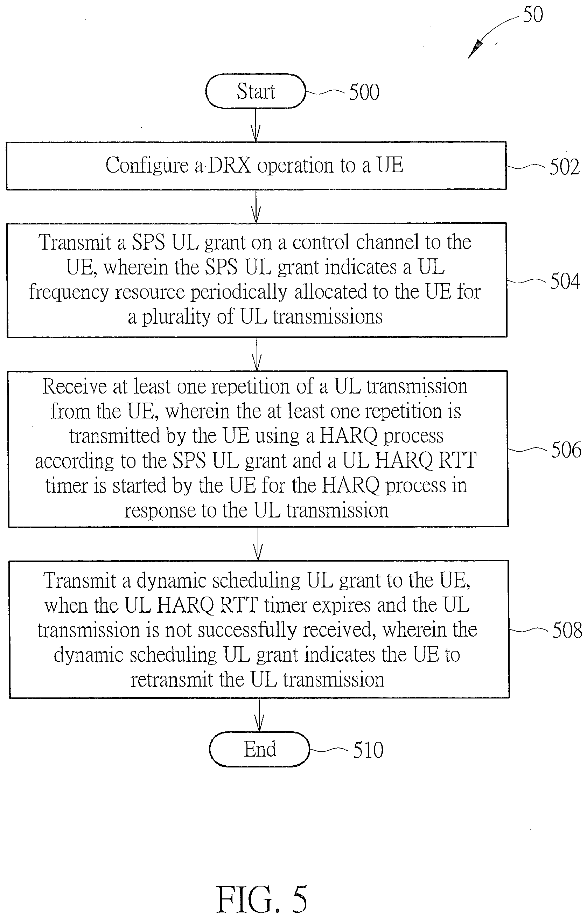

Fig. 5 is a flowchart of a process 50 according to an embodiment of the present invention. The process 50 is utilized in a BS in the network of Fig. 1, to handle a UL transmission (e.g., asynchronous transmission). The process 50 includes the following steps:
Step 500: Start.
Step 502: Configure a DRX operation to a UE.
Step 504: Transmit a SPS UL grant on a control channel to the UE, wherein the SPS UL grant indicates a UL frequency resource periodically allocated to the UE for a plurality of UL transmissions.
Step 506: Receive at least one repetition of a UL transmission from the UE, wherein the at least one repetition is transmitted by the UE using a HARQ process according to the SPS UL grant and a UL HARQ RTT timer is started by the UE for the HARQ process in response to the UL transmission.
Step 508: Transmit a dynamic scheduling UL grant to the UE, when the UL HARQ RTT timer expires and the UL transmission is not successfully received, wherein the dynamic scheduling UL grant indicates the UE to retransmit the UL transmission.
Step 510: End.

According to the process 50, the BS configures a DRX operation to the UE, e.g. by transmitting a RRC message (e.g., RRCConnectionReconfiguration message) including a DRX configuration to the UE. The DRX configuration may configure a time value for the drx-ULRetransmissionTimer as described above. The BS transmits a SPS UL grant on a control channel to the UE, wherein the SPS UL grant indicates a UL frequency resource periodically allocated to the UE for a plurality of UL transmissions. The BS may transmit a SPS period (or called SPS scheduled interval, e.g., semiPersistSchedIntervalUL) in the first RRC message or in a second RRC message to the UE. The process 50 may be performed by the network for communicating with a UE performing the process 30. Examples for the process 30 may be applied to the process 50, and are not repeated herein.

In one example, the network maintains a timer corresponding to the UL HARQ timer running in the UE. The network determines that the UL HARQ timer expires, when the timer expires. In another example, the network determines that the UL HARQ timer expires, when a TTI is outside a length of the UL HARQ RTT timer starting from the first or the last repetition of the UL transmission.

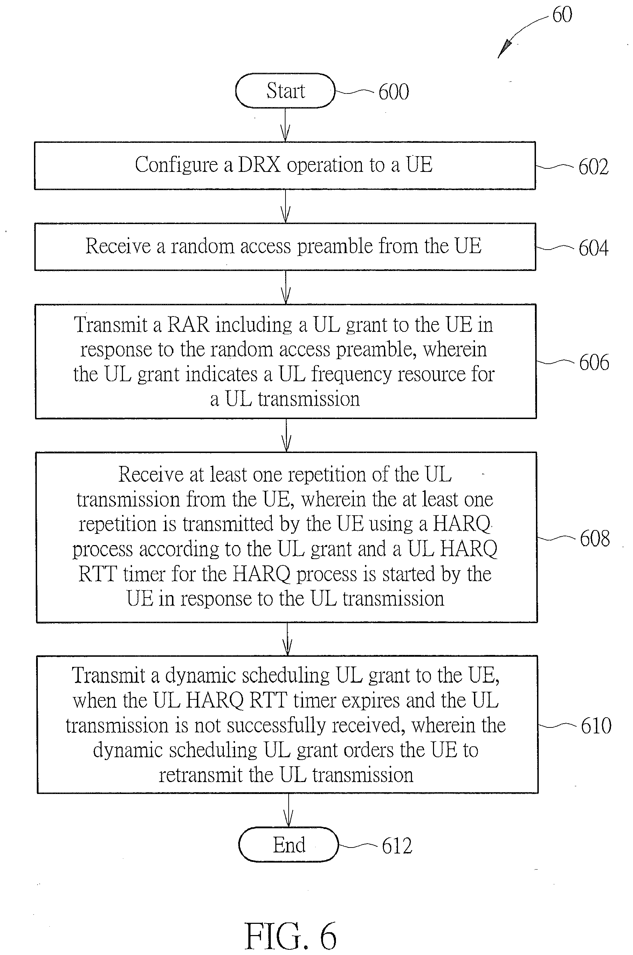

Fig. 6 is a flowchart of a process 60. The process 60 is utilized in a BS in the network of Fig. 1, to handle a UL transmission (e.g., asynchronous transmission). The process 60 includes the following steps:
Step 600: Start.
Step 602: Configure a DRX operation to a UE.
Step 604: Receive a random access preamble from the UE.
Step 606: Transmit a RAR including a UL grant to the UE in response to the random access preamble, wherein the UL grant indicates a UL frequency resource for a UL transmission.
Step 608: Receive at least one repetition of the UL transmission from the UE, wherein the at least one repetition is transmitted by the UE using a HARQ process according to the UL grant and a UL HARQ RTT timer for the HARQ process is started by the UE in response to the UL transmission.
Step 610: Transmit a dynamic scheduling UL grant to the UE, when the UL HARQ RTT timer expires and the UL transmission is not successfully received, wherein the dynamic scheduling UL grant orders the UE to retransmit the UL transmission.
Step 612: End.

The process 60 may be performed by the network for communicating with a UE performing the process 40. Examples for the process 40 may be applied to the process 60, and are not repeated herein.

In summary, the processes above solve a problem that the UE misses the control command transmitted by the BS in a TTI in the off duration.

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device 20. Any of the above processes and examples above may be compiled into the program code 214.

To sum up, the present invention provides a network and a method for handling UL transmission. The UE can handle a HARQ process and UL transmissions(s) of the HARQ process properly according to corresponding timers, after a SPS UL grant or a dynamic scheduling UL grant is configured to the UE.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A network for handling an uplink, UL, transmission, comprising:
a storage device (210), for storing instructions of:
configuring (502) a discontinuous reception, DRX, operation to a communication device;
transmitting (504) a semi-persistent scheduling, SPS, UL grant on a control channel to the communication device, wherein the SPS UL grant indicates a UL frequency resource periodically allocated to the communication device for a plurality of UL transmissions;
receiving (506) at least one first repetition of a UL transmission from the communication device, wherein the at least one first repetition is transmitted by the communication device using a hybrid automatic repeat request, HARQ, process according to the SPS UL grant and a UL HARQ round trip time, RTT, timer is started by the communication device for the HARQ process in response to the UL transmission; and
transmitting (508) a dynamic scheduling UL grant to the communication device, when the UL HARQ RTT timer expires and the UL transmission is not successfully received, wherein the dynamic scheduling UL grant indicates the communication device to retransmit the first UL transmission; and
a processing circuit (200), coupled to the storage device (210), configured to execute the instructions stored in the storage device(210).

2. The network of claim 1, wherein the SPS UL grant is transmitted in a downlink, DL, control information, DCI, on the control channel.

3. The network of claim 1, wherein the storage device (210) further stores the instruction of: not transmitting the dynamic scheduling UL grant to the communication device, before the UL HARQ RTT timer expires.

4. The network of claim 1, wherein the storage device (210) further stores the instructions of:
maintaining a timer corresponding to a drx-ULRetransmissionTimer running in the communication device; and
determining that the drx-ULRetransmissionTimer is running, when the timer is running.

5. The network of claim 1, wherein the storage device (210) further stores the instructions of:
determining a drx-ULRetransmissionTimer running in the communication device, when a transmission time interval, TTI, is within a length of the drx-ULRetransmissionTimer.

6. A method of handling an uplink, UL, transmission in a network, comprising:
configuring (502) a discontinuous reception, DRX, operation to a communication device;
transmitting (504) a semi-persistent scheduling, SPS, UL grant on a control channel to the communication device, wherein the SPS UL grant indicates a UL frequency resource periodically allocated to the communication device for a plurality of UL transmissions;
receiving (506) at least one first repetition of a UL transmission from the communication device, wherein the at least one first repetition is transmitted by the communication device using a HARQ process according to the SPS UL grant and a UL HARQ RTT timer is started by the communication device for the HARQ process in response to the UL transmission; and
transmitting (508) a dynamic scheduling UL grant to the communication device, when the UL HARQ RTT timer expires and the UL transmission is not successfully received, wherein the dynamic scheduling UL grant indicates the communication device to retransmit the first UL transmission.

7. The method of claim 6, wherein the SPS UL grant is transmitted in a downlink, DL, control information, DCI, on the control channel.

8. The method of claim 6, further comprising:
not transmitting the dynamic scheduling UL grant to the communication device, before the UL HARQ RTT timer expires.

9. The method of claim 6, further comprising:
maintaining a timer corresponding to a drx-ULRetransmissionTimer running in the communication device; and
determining that the drx-ULRetransmissionTimer is running, when the timer is running.

10. The method of claim 6, further comprising:
determining a drx-ULRetransmissionTimer running in the communication device, when a transmission time interval, TTI, is within a length of the drx-ULRetransmissionTimer.

## Patentansprüche

1. Netzwerk zur Handhabung einer Aufwärtsstrecke- bzw. UL(uplink)-Übertragung, das aufweist:
eine Speichervorrichtung (210) zum Speichern von Anweisungen zum:
Konfigurieren (502) eines diskontinuierlicher-Empfang- bzw. DRX(discontinuous reception)-Vorgangs zu einer Kommunikationsvorrichtung;
Senden (504) einer semi-persistentes-Scheduling- bzw. SPS(semi-persistent scheduling)-UL-Erteilung auf einem Steuerkanal an die Kommunikationsvorrichtung, wobei die SPS-UL-Erteilung eine UL-Frequenzressource angibt, die der Kommunikationsvorrichtung für eine Vielzahl von UL-Übertragungen periodisch zugeteilt wird;
Empfangen (506) zumindest einer ersten Wiederholung einer UL-Übertragung von der Kommunikationsvorrichtung, wobei die zumindest eine erste Wiederholung durch die Kommunikationsvorrichtung unter Verwendung eines hybride-automatische-Wiederholungsanforderung- bzw. HARQ(hybrid automatic repeat request)-Prozesses gemäß der SPS-UL-Erteilung gesendet wird und ein UL-HARQ-Umlaufzeit- bzw. RTT(round trip time)-Zeitgeber bzw. -Timer durch die Kommunikationsvorrichtung für den HARQ-Prozess in Reaktion auf die UL-Übertragung gestartet wird; und
Senden (508) einer dynamisches-Scheduling-UL-Erteilung an die Kommunikationsvorrichtung, wenn der UL-HARQ-RTT-Timer abläuft und die UL-Übertragung nicht erfolgreich empfangen wird, wobei die dynamisches-Scheduling-UL-Erteilung der Kommunikationsvorrichtung angibt, die erste UL-Übertragung erneut zu senden; und
eine Verarbeitungsschaltung (200), die mit der Speichervorrichtung (210) gekoppelt ist, die konfiguriert ist zum Ausführen der in der Speichervorrichtung (210) gespeicherten Anweisungen.

2. Das Netzwerk gemäß Anspruch 1, wobei die SPS-UL-Erteilung in einer Abwärtsstrecke- bzw. DL(downlink)-Steuerinformation bzw. DCI (downlink control information) auf dem Steuerkanal gesendet wird.

3. Das Netzwerk gemäß Anspruch 1, wobei die Speichervorrichtung (210) weiter die Anweisung speichert zum:
Nicht-Senden der dynamisches-Scheduling-UL-Erteilung an die Kommunikationsvorrichtung bevor der UL-HARQ-RTT-Timer abläuft.

4. Das Netzwerk gemäß Anspruch 1, wobei die Speichervorrichtung (210) weiter die Anweisungen speichert zum:
Beibehalten eines Timers entsprechend einem drx-ULRetransmissionTimer, der in der Kommunikationsvorrichtung läuft; und
Bestimmen, dass der drx-ULRetransmissionTimer läuft, wenn der Timer läuft.

5. Das Netzwerk gemäß Anspruch 1, wobei die Speichervorrichtung (210) weiter die Anweisungen speichert zum:
Bestimmen eines drx-ULRetransmissionTimers, der in der Kommunikationsvorrichtung läuft, wenn ein Übertragungszeitintervall bzw. TTI (transmission time interval) innerhalb einer Länge des drx-ULRetransmissionTimers ist.

6. Verfahren zur Handhabung einer Aufwärtsstrecke- bzw. UL(uplink)-Übertragung in einem Netzwerk, das aufweist:
Konfigurieren (502) eines diskontinuierlicher-Empfang- bzw. DRX(discontinuous reception)-Vorgangs zu einer Kommunikationsvorrichtung;
Senden (504) einer semi-persistentes-Scheduling- bzw. SPS(semi-persistent scheduling)-UL-Erteilung auf einem Steuerkanal an die Kommunikationsvorrichtung, wobei die SPS-UL-Erteilung eine UL-Frequenzressource angibt, die der Kommunikationsvorrichtung für eine Vielzahl von UL-Übertragungen periodisch zugeteilt wird;
Empfangen (506) zumindest einer ersten Wiederholung einer UL-Übertragung von der Kommunikationsvorrichtung, wobei die zumindest eine erste Wiederholung durch die Kommunikationsvorrichtung unter Verwendung eines HARQ-Prozesses gemäß der SPS-UL-Erteilung gesendet wird und ein UL-HARQ-RTT-Timer durch die Kommunikationsvorrichtung für den HARQ-Prozess in Reaktion auf die UL-Übertragung gestartet wird; und
Senden (508) einer dynamisches-Scheduling-UL-Erteilung an die Kommunikationsvorrichtung, wenn der UL-HARQ-RTT-Timer abläuft und die UL-Übertragung nicht erfolgreich empfangen wird, wobei die dynamisches-Scheduling-UL-Erteilung der Kommunikationsvorrichtung angibt, die erste UL-Übertragung erneut zu senden.

7. Das Verfahren gemäß Anspruch 6, wobei die SPS-UL-Erteilung in einer Abwärtsstrecke- bzw. DL(downlink)-Steuerinformation bzw. DCI (downlink control information) auf dem Steuerkanal gesendet wird.

8. Das Verfahren gemäß Anspruch 6, das weiter aufweist:
Nicht-Senden der dynamisches-Scheduling-UL-Erteilung an die Kommunikationsvorrichtung bevor der UL-HARQ-RTT-Timer abläuft.

9. Das Verfahren gemäß Anspruch 6, das weiter aufweist:
Beibehalten eines Timers entsprechend einem drx-ULRetransmissionTimer, der in der Kommunikationsvorrichtung läuft; und
Bestimmen, dass der drx-ULRetransmissionTimer läuft, wenn der Timer läuft.

10. Das Verfahren gemäß Anspruch 6, das weiter aufweist:
Bestimmen eines drx-ULRetransmissionTimers, der in der Kommunikationsvorrichtung läuft, wenn ein Übertragungszeitintervall bzw. TTI (transmission time interval) innerhalb einer Länge des drx-ULRetransmissionTimers ist.

## Revendications

1. Réseau destiné à gérer une transmission de liaison montante, UL, comprenant :
un dispositif de stockage (210), destiné à stocker des instructions de :
configuration (502) d'une opération de réception discontinue, DRX, vers un dispositif de communication ;
émission (504) d'une allocation de synchronisation semi-persistante, SPS, d'UL sur un canal de commande au dispositif de communication, dans lequel l'allocation de SPS d'UL indique une ressource de fréquence d'UL allouée périodiquement au dispositif de communication pour une pluralité de transmissions d'UL ;
réception (506) d'au moins une première répétition d'une émission d'UL en provenance du dispositif de communication, dans lequel ladite au moins une première répétition est émise par le dispositif de communication en utilisant un processus de requête de répétition automatique hybride, HARQ, conformément à l'allocation de SPS d'UL et une minuterie de temps aller-retour, RTT, de HARQ d'UL est démarrée par le dispositif de communication pour le processus de HARQ en réponse à l'émission d'UL ; et
émission (508) d'une allocation d'UL de synchronisation dynamique au dispositif de communication, lorsque la minuterie de RTT de HARQ d'UL prend fin et que l'émission d'UL n'est pas reçue avec succès, dans lequel l'allocation d'UL de synchronisation dynamique indique au dispositif de communication de réémettre la première émission d'UL ; et
un circuit de traitement (200), relié au dispositif de stockage (210), configuré pour exécuter les instructions stockées dans le dispositif de stockage (210).

2. Réseau selon la revendication 1, dans lequel l'allocation d'UL de SPS est émise dans des informations de contrôle de liaison descendante, DL, DCI, sur le canal de contrôle.

3. Réseau selon la revendication 1, dans lequel le dispositif de stockage (210) stocke en outre l'instruction de :
non-émission de l'allocation d'UL de synchronisation dynamique au dispositif de communication, avant que la minuterie de RTT de HARQ d'UL ne s'achève.

4. Réseau selon la revendication 1, dans lequel le dispositif de stockage (210) stocke en outre les instructions de :
maintien d'une minuterie correspondant à un drx-ULRetransmissionTimer en cours d'exécution dans le dispositif de communication ; et
détermination que le drx-ULRetransmissionTimer est en cours d'exécution, lorsque la minuterie est en cours d'exécution.

5. Réseau selon la revendication 1, dans lequel le dispositif de stockage (210) stocke en outre les instructions de :
détermination d'un drx-ULReémissionTimer en cours d'exécution dans le dispositif de communication, lorsqu'un intervalle de temps d'émission, TTI, est compris dans une longueur du drx-ULReémissionTimer.

6. Procédé de gestion d'une transmission de liaison montante, UL, dans un réseau, comprenant :
la configuration (502) d'une opération de réception discontinue, DRX, vers un dispositif de communication ;
l'émission (504) d'une allocation de programmation semi-persistante, SPS, d'UL sur un canal de commande au dispositif de communication, dans lequel l'allocation de SPS d'UL indique une ressource de fréquence d'UL allouée périodiquement au dispositif de communication pour une pluralité de transmissions d'UL ;
la réception (506) d'au moins une première répétition d'une émission d'UL en provenance du dispositif de communication, dans lequel ladite au moins une première répétition est émise par le dispositif de communication en utilisant un processus de HARQ conformément à l'allocation de SPS d'UL et une minuterie de temps aller-retour, RTT, de HARQ d'UL est démarrée par le dispositif de communication pour le processus de HARQ en réponse à l'émission d'UL ; et
l'émission (508) d'une allocation d'UL de synchronisation dynamique au dispositif de communication, lorsque la minuterie de RTT de HARQ d'UL s'achève et que l'émission d'UL n'est pas reçue avec succès, dans lequel l'allocation d'UL de synchronisation dynamique indique au dispositif de communication de réémettre la première émission d'UL ; et

7. Procédé selon la revendication 6, dans lequel l'allocation de SPS d'UL est émise dans des informations de contrôle de liaison descendante, DL, DCI, sur le canal de contrôle.

8. Procédé selon la revendication 6, comprenant en outre :
la non-émission de l'allocation d'UL de synchronisation dynamique au dispositif de communication, avant l'expiration de la minuterie de RTT de HARQ d'UL.

9. Procédé selon la revendication 6, comprenant en outre :
le maintien d'une minuterie correspondant à un drx-ULRetransmissionTimer en cours d'exécution dans le dispositif de communication ; et
la détermination que le drx-ULRetransmissionTimer est en cours d'exécution, lorsque la minuterie est en cours d'exécution.

10. Procédé selon la revendication 6, comprenant en outre :
la détermination d'un drx-ULReémissionTimer en cours d'exécution dans le dispositif de communication, lorsqu'un intervalle de temps d'émission, TTI, est compris dans une longueur du drx-ULReémissionTimer.
